# EUROPEAN PATENT SPECIFICATION

(11) **EP 2 870 196 B1**
(45) Date of publication and mention of the grant of the patent: **24.08.2016**
(21) Application number: 13737103.5
(22) Date of filing: 02.07.2013
(51) Int. Cl.: C08K 5/523, C08K 5/5313, C08L 77/06, C08L 77/00

(54) **HALOGEN FREE FLAME RETARDANT POLYAMIDE COMPOSITION**
HALOGENFREIE UND FEUERFESTE POLYAMIDZUSAMMENSETZUNG
COMPOSITION DE POLYAMIDE IGNIFUGÉ EXEMPTE D'HALOGÈNE

(30) Priority: 03.07.2012 US 201261667545 P
(43) Date of publication of application: 13.05.2015
(73) Proprietor: E. I. du Pont de Nemours and Company, Wilmington, DE 19898 (US)
(72) Inventor: PAUCHARD, Philippe, F-74520 Chenex (FR)
(74) Representative: Morf, Jan Stefan
(86) International application number: PCT/US2013/049040
(87) International publication number: WO 2014/008243

(56) References cited:
- KR-A- 20050 070 981
- US-A1- 2008 090 946
- US-A1- 2011 021 676
- US-B2- 7 294 661

## Description

### FIELD OF THE INVENTION

The present invention relates to the field of halogen free flame retardant non reinforced polyamide composition and to moulded articles and articles made therefrom.

### BACKGROUND OF THE INVENTION

Polyamide resins possess excellent mechanical properties, moldability, and chemical resistance and have therefore been used in automotive parts, electric/electronic components, mechanical components, and many other applications. Articles made from polyamide resins possess extremely desirable physical properties.

However, in certain applications, it is desirable that polyamide resin compositions be flame retardant and meet the UL-94 standard for a high degree of flame retardance.

This requirement has promoted research into a variety of methods for imparting flame retardance to polyamide resins. A common method of imparting flame retardance to thermoplastic resin compositions involves incorporating a halogenated organic compound such as brominated polystyrene as a flame retardant along with an antimony compound that acts as a synergist for the flame retardant. However, the use of halogenated flame retardants has certain drawbacks in that these materials tend to decompose or degrade at the temperatures used to mold polyamide compositions. The degradation products can implicate potential health and environmental effects due to the gases that are released. Consequently, there has been a trend away from using halogenated compounds or mixtures containing them to impart flame retardance.

The use of non-halogenated flame retardants such as phosphate or phosphinate compounds with triazine derivatives has been proposed in U.S. patent No. 6,031,032 but these flame retardants are unstable at high temperatures and can decompose or degrade during molding, leading to detrimental effects on the electrical properties of a compounded polyamide resin composition containing these flame retardants, especially under conditions of high humidity.

Thus, effective non-halogenated flame retardants that have good heat stability and that do not have a detrimental effect upon a resin's properties, in particular electrical properties, are desirable. U.S. patent 5,773,556 discloses compositions comprising polyamide and phosphinate or diphosphinate. U.S. patent 6,255,371, however, discloses compositions comprising polymers such as polyamide or polyester, with a flame retardant comprising phosphinate or diphosphinate and melamine derivatives such as condensation products of melamine and/or reaction products of melamine with phosphoric acid and/or reaction products of condensation products of melamine with phosphoric acid and/or a mixture of these. U.S. patent 7,294,661 discloses compositions comprising aromatic polyamides and phosphinates as flame retardants but the elongation at break for such compositions is not sufficient for applications in electrical and electronic parts (E/E), in particular for terminal blocks where the material is snap fitted on a metallic rail and where that material would break during assembly if it does not possess a sufficient elongation at break.

U.S. patent publication 2011/0275743 A1 discloses a flame retardant thermoplastic resin comprising a phosphinic acid salt, a compound having an ortho-substituted hydroxyl caboxylamide, and optionally a one or more poshporous compounds including phosphate compounds.

Based on the foregoing discussion, an object of the present invention is to provide a flame resistant polyamide resin composition capable of yielding articles that possess excellent flame retardance and good physical properties.

It is an object of the invention to provide compositions and articles made thereof with good chemical resistance, electrical insulation, high temperature resistance and mouldability.

It is a further object of the invention to provide compositions and articles made thereof with a UL94 flammability rating of V0 at 0.8 mm and even a V0 rating at 0.4 mm.

It is another object of this invention to provide compositions and articles made thereof with a minimum elongation at break of 5%.

These and other objects, features and advantages of the present invention will become better understood upon having reference to the following description of the invention.

### SUMMARY OF THE INVENTION

Disclosed herein is a flame retardant polyamide composition comprising:
(A) one or more semi-aromatic polyamide, and
(B)a flame retardant mixture comprising:
   b1) at least one flame retardant comprising a material selected from the group consisting of phosphinates of the formula (I); disphosphinates of the formula (II); polymers of (I); polymers of (II); and mixtures of two or more thereof 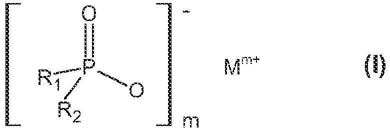 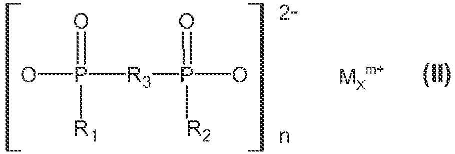 wherein R1 and R2 are independently selected from hydrogen, linear or branched C1 -C6 alkyl groups, and aryl groups; R3 is a linear or branched C1-C10-alkylene group, a C6-C10-arylene group, an -alkylarylene group or an-arylalkylene group; M is selected from the group consisting of calcium, magnesium, aluminum, zinc and mixtures thereof; m is 2 to 3; n is 1 or 3; and x is 1 or 2, and
   b2) a phosphoric ester flame retardant of formula (III) 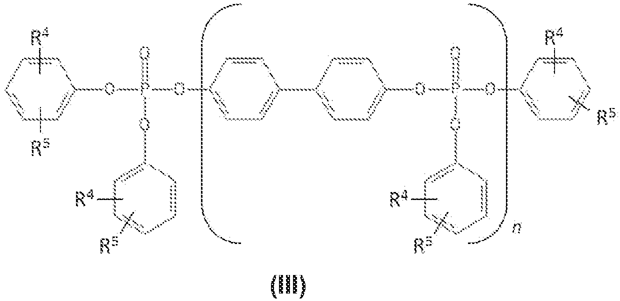
wherein R4 and R5 each independently represent a hydrogen atom or a methyl group and n represents a number of 1 to 5.

In one preferred embodiment, the flame retardant polyamide composition of the present invention do not contain glass fibers.

In another preferred embodiment, the flame retardant polyamide composition consisting of:
(A) one or more semi-aromatic polyamide, and
(B)a flame retardant mixture comprising:
   b1) from 10 to 30 weight percent based on the total weight of the flame retardant polyamide composition of at least one flame retardant comprising a material selected from the group consisting of phosphinates of the formula (I); disphosphinates of the formula (II); polymers of (I); polymers of (II); and mixtures of two or more thereof 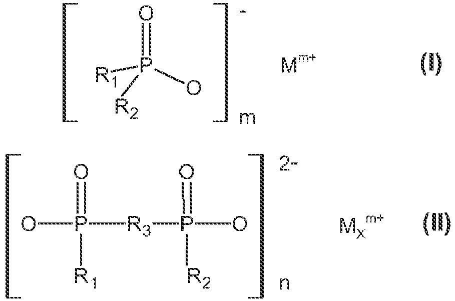 wherein R1 and R2 are independently selected from hydrogen, linear or branched C1 -C6 alkyl groups, and aryl groups; R3 is a linear or branched C1-C10-alkylene group, a C6-C10-arylene group, an -alkylarylene group or an - arylalkylene group; M is selected from the group consisting of calcium, magnesium, aluminium, zinc and mixtures thereof; m is 2 to 3; n is 1 or 3; and x is 1 or 2, and
   b2) from 0.5 to 3 weight percent based on the total weight of the flame retardant polyamide composition of an phosphate ester flame retardant of formula (III) 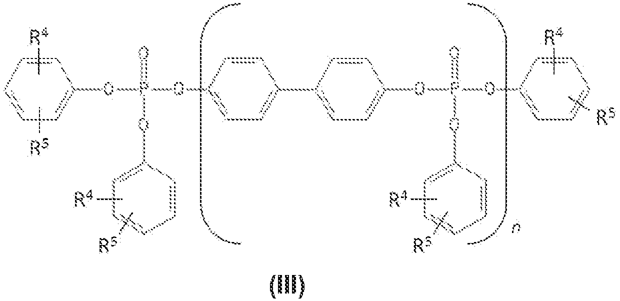 wherein R4 and R5 each independently represent a hydrogen atom or a methyl group and n represents a number of 1 to 5
      and
(C) from 0.05 to 10 weight percent based on the total weight of the flame retardant polyamide composition of additives wherein the sum of component a) to c) amounts to 100 weight percent.

Preferably, the semi-aromatic polyamide is at least one independently selected from the group consisting of PA6T/66, PA6T/XT, PA6I/6T, PA66/6I/6T, PA6T/6I and their copolymers and combinations thereof.

Also described herein are molded articles comprising the flame retardant polyamide composition described herein, preferably the molded articles are selected from the group consisting of connector housings, breaker housings and contactor housings, in particular electrical connector, and even more preferably the molded articles are terminal blocks.

Also disclosed herein is the use of the flame retardant polyamide, composition according to the present invention for making insulated wires and/or cables.

The flame retardant polyamide composition according to the present invention and articles made thereof comply with the a UL94 flammability rating of V0 at 0.8 mm and even at 0.4 mm.

The flame retardant polyamide compositions according to the present invention and articles made thereof have an elongation at break of more than 5% measured according to ISO 527-2/1A/50.

### DETAILED DESCRIPTION OF THE INVENTION

The following definitions are to be used to interpret the meaning of the terms discussed in the description and recited in the claims.

As used herein, the article "a" indicates one as well as more than one and does not necessarily limit its referent noun to the singular.

As used herein, the terms "about" and "at or about" mean that the amount or value in question may be the value designated or some other value that is approximately or about the same. The phrase is intended to convey that similar values promote equivalent results or effects according to the invention.

As used herein, the term "melting point" in reference to a polyamide refers to the melting point of the pure resin as determined with differential scanning calorimetry (DSC) at a scan rate of 10°C/min in the first heating scan, wherein the melting point is taken at the maximum of the endothermic peak. In customary measurements of melting behavior of blends of polymers, more than one heating scans may be performed on a single specimen, and the second and/or later scans may show a different melting behavior from the first scan. This different melting behavior may be observed as a shift in temperature of the maximum of the endothermic peak and/or as a broadening of the melting peak with possibly more than one peaks, which may be an effect of possible transamidation in the case of more than one polyamides. However, when selecting polyamide in the scope of the current invention, always the peak of the melting endotherm of the first heating scan of the single polyamide is used. As used herein, a scan rate is an increase of temperature per unit time. Sufficient energy must be supplied to maintain a constant scan rate of 10°C/min until a temperature of at least 30°C and preferably at least 50°C above the melting point is reached.

### Semi-aromatic Polyamides

Polyamides are condensation products of one or more dicarboxylic acids and one or more diamines, and/or one or more aminocarboxylic acids, and/or ring-opening polymerization products of one or more cyclic lactams. Polyamides may be fully aliphatic or semi-aromatic and are described hereafter.

The term "semi-aromatic" describes polyamides that comprise at least some monomers containing aromatic groups, in comparison with "fully aliphatic" polyamide which describes polyamides comprising aliphatic carboxylic acid monomer(s) and aliphatic diamine monomer(s). The one or more semi-aromatic polyamides (A) may be derived from one or more aliphatic carboxylic acid components and aromatic diamine components such as for example m-xylylenediamine and p-xylylenediamine, it may be derived from one or more aromatic carboxylic acid components, such as terephthalic acid, and one or more aliphatic diamine components, it may be derived from mixtures of aromatic and aliphatic dicarboxylic acid components and mixtures of aromatic and aliphatic diamine components, it may be derived from mixtures of aromatic and aliphatic carboxylic acids and aliphatic diamines or aromatic diamines, it may be derived from aromatic or aliphatic carboxylic acids with mixtures of aliphatic and aromatic diamines.

Preferably, the one or more semi-aromatic polyamides (A) are formed from one or more aromatic carboxylic acid components and one or more aliphatic diamine components. The one or more aromatic carboxylic acids can be, for example, terephthalic acid or mixtures of terephthalic acid and one or more other carboxylic acids, such isophthalic acid, substituted phthalic acid such as for example 2-methylterephthalic acid and unsubstituted or substituted isomers of naphthalenedicarboxylic acid, wherein the carboxylic acid component contains at least 55 mole-% of terephthalic acid (the mole-% being based on the carboxylic acid mixture). Preferably, the one or more aromatic carboxylic acids are selected from terephthalic acid, isophthalic acid and mixtures thereof and more preferably, the one or more carboxylic acids are mixtures of terephthalic acid and isophthalic acid, wherein the mixture contains at least 55 mole-% of terephthalic acid. More preferably, the one or more carboxylic acids is 100% terephthalic acid. Furthermore, the one or more carboxylic acids can be mixed with one or more aliphatic carboxylic acids, like adipic acid; pimelic acid; suberic acid; azelaic acid; sebacic acid and dodecanedioic acid, adipic acid being preferred. More preferably the mixture of terephthalic acid and adipic acid comprised in the one or more carboxylic acids mixtures of the one or more semi-aromatic polyamide (A) contains at least 55 mole-% of terephthalic acid. The one or more semi-aromatic polyamides (A) described herein comprises one or more aliphatic diamines that can be chosen among diamines having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine; trimethylhexamethylene diamine, bis(p-aminocyclohexyl)methane; and/or mixtures thereof. Preferably, the one or more diamines of the one or more semi-aromatic polyamides (A) described herein are selected from hexamethylene diamine, 2-methyl pentamethylene diamine and mixtures thereof, and more preferably the one or more diamines of the one or more semi-aromatic polyamides (A) are selected from hexamethylene diamine and mixtures of hexamethylene diamine and 2-methyl pentamethylene diamine wherein the mixture contains at least 50 mole-% of hexamethylene diamine (the mole-% being based on the diamines mixture).

Examples of semi-aromatic polyamides (A) useful in the flame retardant composition described herein are commercially available under the trademark Zytel^{®} HTN from E. I. du Pont de Nemours and Company, Wilmington, Delaware.

Preferred semi-aromatic polyamides (A) have a melting point of at least 280°C, and comprise a semiaromatic polyamide selected from the group consisting of poly(ε-caprolactam/tetramethylene terephthalamide) (PA6/4T), poly(ε-caprolactam/hexamethylene terephthalamide) (PA6/6T), poly(ε-caprolactam/decamethylene terephthalamide) (PA6/10T), poly(ε-caprolactam/dodecamethylene terephthalamide) (PA6/12T), poly(hexamethylene decanediamide/hexamethylene terephthalamide) (PA610/6T), poly(hexamethylene dodecanediamide/hexamethylene terephthalamide) (PA612/6T), poly(hexamethylene tetradecanediamide/hexamethylene terephthalamide) (PA614/6T), poly(ε-caprolactam/ hexamethylene isophthalamide/hexamethylene terephthalamide) (PA6/61/6T), poly(2-methylpentamethylene hexanediamide/hexamethylene hexanediamide/hexamethylene terephthamide) (PA D6/66/6T), poly(hexamethylene terephthamide/2-methylpentamethylene terephthamide) (PA 6T/XT), poly(hexamethylene hexanediamide/hexamethylene terephthamide (PA66/6T), poly(hexamethylene terephthamide/ hexamethylene isophthamide (PA6T/61), poly(hexamethylene hexanediamide/hexamethylene terephthamide/ hexamethylene isophthamide (PA66/6T/61), poly(decamethylene decanediamide/decamethylene terephthalamide) (PA1010/10T) poly(decamethylone decanediamide/dodecamethylene decanediamide/ decamethylene terephthalamide/dodecamethylene terephthalamide (PA1010/1210/10T/12T), poly(11-aminoundecanamide/tetramethylene terephthalamide) (PA11/4T), poly(11-aminoundecanamide/hexamethylene terephthalamide) (PA11/ 6T), poly(11-aminoundecanamide/decamethylene terephthalamide) (PA11/10T), poly(11-aminoundecanamide/dodecamethylene terephthalamide) (PA11/12T), poly(12-aminododecanamide/tetramethylene terephthalamide) (PA12/4T), poly(12-aminododecanamide/hexamethylene terephthalamide) (PA12/6T), poly(12-aminododecanamide/decamethylene terephthalamide) (PA12/10T), and poly(dodecamethylene dodecanediamide/dodecamethylene dodecanediamide/dodecamethylene terephthalamide)) (PA1212/12T), and their copolymers and combinations.

Particularly preferred semi-aromatic polyamides are selected from the group consisting of PA66/6T, PA6T/XT, PA6T/6I, and their combinations and copolymers.

The flame retardant polymer composition of the present invention may also be a blend of one or more semi-aromatic polyamides described above with one or more homopolymers, copolymers, terpolymers, or higher polymers that are derived fully aliphatic polyamides.

Examples of aliphatic polyamide homopolymers, copolymers, or terpolymers that may be blended with the semi-aromatic polyamides of the present invention include polyamide 6, polyamide 66, polyamide 610, polyamide 612, polyamide 46, polyamide 66/6 copolymers, polyamide 66/68 copolymers, polyamide 66/610 copolymers, polyamide 66/612 copolymers, polyamide 66/10 copolymers, polyamide 66/12 copolymers, polyamide 6/68 copolymers, polyamide 6/610 copolymers, polyamide 6/612 copolymers, polyamide 6/10 copolymers, polyamide 6/12 copolymers, polyamide 6/66/610 terpolymers, polyamide 6/66/69 terpolymers, polyamide 6/66/11 terpolymers, polyamide 6/66/12 terpolymers, polyamide 6/610/11 terpolymers, polyamide 6/610/12 terpolymers, and polyamide 6/66/PACM where PACM refers to bis-p-(aminocyclohexyl)methane)] terpolymers.

### Flame retardants

Flame retardance in the flame retardant polyamide compositions described herein is imparted by flame retardant mixtures also referred herein as flame retardant compositions.

These flame retardant mixtures (B) comprise a flame retardant b1) which is a phosphinate of the formula (I) (i.e. a monophosphinate) and/or a diphosphinate of the formula (II) and/or polymers of (I) and/or (II), 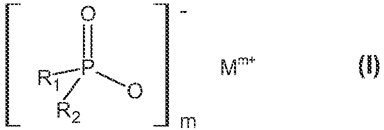 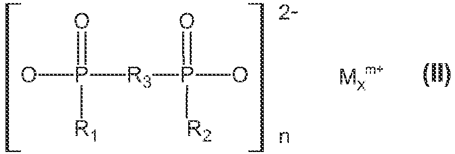 wherein R₁ and R₂ are identical or different and are hydrogen, linear or branched C₁ -C₆ alkyl groups, and/or aryl groups; R₃ is a linear or branched C₁-C₁₀-alkylene group, a C₆-C₁₀-arylene group, an alkylarylene group or arylalkylene group; M is calcium, magnesium, aluminum, and/or zinc; m is 2 to 3; n is 1 or 3; and x is 1 or 2.

R₁ and R₂ may be identical or different and are preferably hydrogen, methyl, ethyl, *n*-propyl, isopropyl, *n*-butyl, *tert*-butyl, *n*-pentyl and/or phenol. R₃ is preferably methylene, ethylene, *n*-propylene, isopropylene, *n*-butylene, *tert*-butylene, *n*-pentylene, *n*-octylene, n-dodecylene, or phenylene or naphthylene, or methylphenylene, ethylphenylene, *tert*-butylphenylene, methylnaphthylene, ethylnaphthylene or *tert*-butylnaphthylene, or phenylmethylene, phenylethylene, phenylpropylene or phenylbutylene. M is preferably aluminum or zinc.

By polymers of the compounds of formulas (I) and (II) is meant species containing oligomers or condensation products of the phosphinate and diphosphinate anion moieties.

Preferred phosphinates are metal salts of organic phosphinates, such as metal salts of methylethylphosphinates and diethylphosphinates. More preferred are aluminum methylethylphosphinate, aluminum diethylphosphinate, zinc methylethylphosphinate, and zinc diethylphosphinate. More preferably, the flame retardant is aluminum phosphinate, magnesium phosphinate, calcium phosphinates and/or zinc phosphinate and still more preferably, the flame retardant is aluminum phosphinate, aluminium diethyl phosphinates and/or zinc diethyl phosphinate.

The flame retardant b1) is usually in the form of particles which may have any particle size distribution, as commonly understood and used by those having skill in the field, but preferably the phosphinate and/or diphosphinates that comprise component b1) have particle sizes (D50 value) of less than or equal to 100 microns and more preferably less than or equal to 50 microns. The D50 value corresponds to a particle size below which 50 weight percent of the particles lie, wherein the particle size distribution is measured by the technique of laser diffraction from a suspension of particles in a solvent using a particle size analyzer, Mastersizer 2000 from Malvern. This test method meets the requirements set forth in ISO 13320.

Preferably, the flame retardant mixtures (B) comprise a flame retardant b1) in an amount from at or about 10 to at or about 30 weight percent, more preferably from at or about 15 to at or about 25 weight percent, and even more preferably from at or about 18 to at or about 20 weight percent, the weight percentage being based on the total weight of the flame retardant polyamide composition.

The flame retardant mixtures (B) described herein comprise a phosphate ester flame retardant b2) of formula (III). 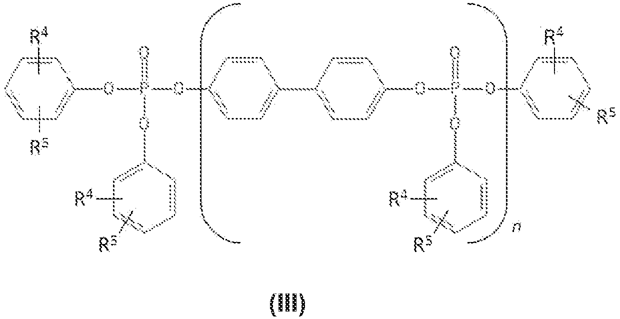 wherein R4 and R5 each independently represent a hydrogen atom or a methyl group and n represents a number of 1 to 5.

Preferably, R4 and R5 represent a hydrogen atom.

The phosphate ester flame retardant b2) may be a mixture of the monomers or oligomers of compound of formula (III) i.e. a mixture of compounds wherein n is equal to 1 and n is equal to 2, 3, 4 or 5.

Phosphate ester flame retardants of the present invention may be obtained,for instance, according to the processes described in U.S. patent application US 2011/0084242.

Preferred phosphate ester flame retardant b2) are the ones with CAS number 1003300-73-9 available from Adeka Palmarole.

Preferably, the flame retardant mixtures (B) comprise a phosphate ester flame retardant b2) in an amount from at or about 0.5 to at or about 3 weight percent, more preferably from at or about 0.75 to at or about 1.5 weight percent, the weight percentage being based on the total weight of the flame retardant polyamide composition.

### Additives

The flame retardant compositions of the present invention may further contain other additives that can be selected from the group consisting of stabilizers, processing agents, metal deactivators, antioxidants, UV stabilizers, heat stabilizers, flame retardant synergists, dyes and/or pigments and other additives in addition to the components mentioned previously.

Examples of antioxidants include phenolic antioxidants, thioether antioxidants, and phosphite antioxidants.

Flame retardant synergists may also be optionally included in the composition in conventional amounts and as understood by those having skill in the field. Examples include silicone, metal oxides such as silica, boehmite, aluminum oxide, iron oxide, titanium oxide, manganese oxide, magnesium oxide, zirconium oxide, zinc oxide, molybdenum oxide, cobalt oxide, bismuth oxide, chromium oxide, tin oxide, antimony oxide, nickel oxide, copper oxide and tungsten oxide, metal powder such as aluminum, iron, titanium, manganese, zinc, molybdenum, cobalt, bismuth, chromium, tin, antimony, nickel, copper and tungsten, and metal salts such as zinc borate, zinc metaborate, barium metaborate, zinc carbonate, zinc stannate, magnesium carbonate, calcium carbonate, and barium carbonate. Preferred synergists are boehmite (aluminum hydroxide oxide (AlO(OH))), aluminum oxide, zinc borate, zinc stannate and mixtures thereof.

Synergists will preferably be present in up to about 10 weight percent or more preferably in about 0.5 to about 8 weight percent, or yet more preferably in about 1 to about 6 weight percent, based on the total weight of the flame retardant polyamide composition.

The flame retardant polyamide compositions of the present invention are melt-blended and can be manufactured by any known manufacturing methods. The component materials may be mixed to homogeneity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until homogeneous.

The articles of the present invention may be formed from the flame retardant polyamide compositions of the invention by any known means such as injection molding, blow molding, extrusion, or thermoforming. Examples of articles that may be formed from the flame retardant polyamide compositions of the present invention are housings, electrical connectors and connector housings and cases, breaker housings, terminal blocks and contactor housings.

### EXAMPLES

The invention is further illustrated by certain embodiments in the examples below which provide greater detail for the compositions, uses and processes described herein.

The following materials were used to prepare the flame retardant polyamide compositions described herein and the compositions of the comparative examples.
- Polyamide 6T/XT: Polyamide 6T/XT, refers to a copolyamide of terephtalic acid, hexamethylenediamine, and 2-methyl-pentamethylenediamine having a typical inherent viscosity (IV) of about 0.88, according to ASTM D2857 method, and a melting point of about 300°C, available from E.I. DuPont de Nemours and Company, Wilmington, Delaware.
- Polyamide 6T/66: Polyamide 6T/66 refers to a copolyamide made from terephtalic acid, adipic acid and hexamethylenediamine wherein the two acids are used in a 55:45 molar ratio; having a melting point of about 310°C and an inherent viscosity (IV), according to ASTM D2857, typically about 1.07, available from E.I. DuPont de Nemours and Company, Wilmington, Delaware.
- Flame retardant 1: Aluminium diethylphosphinate having a D50 from 20 to 40 µm, Exolit® OP1230 available from Clariant
- Flame retardant 2: refers to phosphoric acid, mixed esters with 1,1'-bisphenyl]-4,4'-diol and phenol, CAS number 1003300-73-9, ADK STAB@ FP800 available from Adeka Palmarole.
- Flame retardant 3: Aluminium diethylphosphinate having a D90 max of 7.506 microns, Exolit® OP935 available from Clariant
- Flame retardant synergist: Boehmite BMT33, available from Kawai Sekkai Kogyo
- Impact modifier: refers to a blend of impact modifiers comprising an methylene-octane copolymer consisting of 72 weight percent ethylene and 28 weight percent 1-octene commercially available as Engage® 8180, available from Dow Chemical Co., Midland, MI and being grafted with maleic anhydride to give an average maleic anhydride level of approximately 1%.

As required for the manufacturing process and well-known to those skilled in the art, the polyamide contained up to 2 weight percent of heat stabilizers, UV stabilizers, antioxidants and lubricants.

### Compounding

The components were dry blended and then compounded with a screw speed of 300 rpm using a twin-screw extruder. The barrel temperatures were about 320 °C. Upon exiting the extruder, the molten polymer was quenched in a water bath and pelletized.

### Production of test samples

Test specimen have been prepared using an injection moulding machine (Billion H470-150T Select Dixit II, diameter 32mm, ratio L/D 19) at a melt temperature of 325°C and a mold temperature of 100°C.

### Measurement of properties

Except for flammability, all properties have been measured on dry as moulded (DAM) samples.

Tensile properties (tensile modulus, stress at break and elongation at break) have been measured using ISO 527-2/1A/50. Values in the examples are average values of 10 specimens.

Notched Charpy was measured using ISO 179-1/1eA and Unnotched Charpy was measure using ISO 179-1/1eU. Values in the exemples are average values of 10 specimens.

Comparative tracking index (CTI) was measured using IEC 60112 on 4mm ISO bars. Values in the exemples are average values of 5 specimens.

Flammability testing was done according to UL-94 (20 mm Vertical Burning Test) using 0.4mm or 0.8mm thick test pieces, which are then conditioned for either 48 hours at 23 °C and 50% relative humidity or 168 hours at 70 °C. Values in the examples are average values of 10 specimens.

In Table 1, comparative examples C1, C2, C3 show that impact modifiers are efficient to improve elongation at break of unreinforced and flame retardant composition of PA6T/66 but reduce its flammability performances. It shows that it is not possible to achieve 5% elongation at break while maintaining UL-V0 flammability performances even at 0.8mm.

In Table 2, comparative examples C4, C5 and C6 show that increasing the flame retardant level in unreinforced and flame retardant composition of PA6T/66 containing impact modifier does not allow to achieve UL-V0 but reduces the elongation at break.

In Table 3, examples E1, E2 and E3 show that the addition of phosphate ester increases elongation at break of unreinforced and flame retardant composition of PA6T/XT containing impact modifier.

In Table 4, examples E4, E5 and E6 and comparative examples C7 and C8 show that the addition of phosphate ester increases elongation at break of unreinforced and flame retardant composition of PA6T/66. The increase of elongation at break varies with the amount of phosphate ester and is higher for example E4 which contains the highest level of phosphate ester.

Example E4 and comparative examples C7 and C8 show that the addition of phosphate ester in unreinforced and flame retardant composition of PA6T/66 improves the flammability performances of the composition and allows to achieve UL-V0 at 0.4mm and 0.8mm without use of any flame retardant synergist (e.g. boehmite).

**Table 1**

| | C1 | C2 | C3 |
|---|---|---|---|
| Composition | (%) | (%) | (%) |
| | | | |
| Polyamide 6T/66 | 76.8 | 73.8 | 71.8 |
| Flame retardant 1 | 19 | 19 | 19 |
| Impact modifier | - | 2.6 | 5 |
| Flame retardant synergist | 2.6 | 3 | 2.6 |
| | | | |

| **Mechanical performance** | | | |
|---|---|---|---|
| | | | |
| Tensile Modulus ISO 527 (MPa) | 3697 | 3579 | 3206 |
| Stress at Break ISO 527 (MPa) | 59 | 61 | 54 |
| Strain at Break ISO 527 (%) | 2.5 | 4.1 | 6.4 |
| Charpy Impact Unnotched ISO 179 (kJ/m2) | 26 | 32 | 42 |
| Charpy Impact Notched ISO179 (kJ/m2) | 1.8 | 1.8 | 3.1 |
| | | | |

| **UL94 Flammability testing** | | | |
|---|---|---|---|
| | | | |
| 0.4mm, 23°C/50%relative humidity/48h | V0 | -- | V1 |
| 0.4mm, 70°C/188h | V0 | -- | V1 |
| 0.8mm, 23°C/50%relative humidity/48h | V0 | V1 | V1 |
| 0.8mm, 70°C/168h | V0 | V1 | V1 |

**Table 2**

| | C4 | C5 | C6 |
|---|---|---|---|
| **Composition** | (%) | (%) | (%) |
| | | | |
| Polyamide 6T/66 | 76.8 | 71.8 | 68.4 |
| Flame retardant 3 | 19 | 19 | 22 |
| Impact modifier | | 5 | 5 |
| Flame retardant synergist | 2.6 | 2.6 | 3 |
| | | | |

| **Mechanical performance** | | | |
|---|---|---|---|
| | | | |
| Tensile Modulus ISO 527 (MPa) | 3762 | 3444 | 3469 |
| Stress at Break ISO 527 (MPa) | 64 | 58 | 54 |
| Strain at Break ISO 527 (%) | 4 | 5.5 | 4.6 |
| Charpy Impact Unnotched ISO 179 (kJ/m2) | 36 | 42 | 36 |
| | | | |

| **UL94 Flammability testing** | | | |
|---|---|---|---|
| | | | |
| 0.4mm, 23°C/50% relative humidity/48h | V0 | V1 | V1 |
| 0.4mm, 70°C/168h | V0 | V1 | V0 |
| 0.8mm, 23°C/50%relative humidity/48h | V0 | V1 | V1 |
| 0.8mm, 70°C/168h | V0 | V1 | V0 |

**Table 3**

| | E1 | E2 | E3 |
|---|---|---|---|
| **Composition** | (%) | (%) | (%) |
| | | | |
| Polyamide 6T/XT | 71.55 | 71.05 | 70.55 |
| Flame retardant 1 | 19 | 19 | 19 |
| Flame retardant 2 | | 0.5 | 1 |
| Flame retardant synergist | 3 | 3 | 3 |
| Impact modifier | 5 | 5 | 5 |
| | | | |

| **Mechanical performance** | | | |
|---|---|---|---|
| | | | |
| Tensile Modulus ISO 527 (MPa) | 2988 | 3024 | 3028 |
| Stress at Break ISO 527 (MPa) | 54 | 57 | 58 |
| Strain at Break ISO 527 (%) | 7.5 | 7.9 | 11.1 |
| Charpy Impact Unnotched ISO 179 (kJ/m2) | 48 | 46 | 55 |
| | | | |

| **UL94 Flammability testing** | | | |
|---|---|---|---|
| | | | |
| 0.4mm, 23°C/50%relative humidity/48h | V0 | | V0 |
| 0.8mm, 23°C/50%relative humidity/48h | V0 | | V0 |

**Table 4**

| | C7 | E4 | C8 | E5 | E6 |
|---|---|---|---|---|---|
| **Composition** | (%) | (%) | (%) | (%) | (%) |
| | | | | | |
| Polyamide 6T/66 | 79.55 | 78.80 | 78.05 | 77.30 | 76.55 |
| Flame retardant 1 | 19 | 19 | 19 | 19 | 19 |
| Flame retardant 2 | -- | 0.75 | -- | 0.75 | 1.5 |
| Flame retardant synergist | -- | -- | 1.5 | 1.5 | 1.5 |
| | | | | | |

| **Mechanical performance** | | | | | |
|---|---|---|---|---|---|
| | | | | | |
| Tensile Modulus ISO 527 (MPa) | 3681 | 3449 | 3602 | 3470 | 3412 |
| Stress at Break ISO 527 (MPa) | 62 | 72 | 70 | 76 | 74 |
| Strain at Break ISO 527 (%) | 3.9 | 5.7 | 4.3 | 5.5 | 6.9 |
| Charpy Impact Unnotched ISO 179 (kJ/m2) | 33 | 43 | 35 | 42 | 47 |
| Charpy Impact Notched ISO179 (kJ/m2) | 1.8 | 2.8 | 1.5 | 2.8 | 2.9 |
| | | | | | |

| **UL94 Flammability testing** | | | | | |
|---|---|---|---|---|---|
| | | | | | |
| 0.4mm, 23°C/50%relative humidity/48h | V0 | V0 | V0 | V0 | V0 |
| 0.4mm, 70°C/168h | V0 | V0 | V0 | V0 | V0 |
| 0.8mm, 23°C/50%relative humidity/48h | V1 | V0 | V0 | V0 | V0 |
| 0.8mm, 70°C/168h | V1 | V0 | V0 | V0 | V0 |

## Claims

1. A flame retardant polyamide composition comprising:
(A) one or more semi-aromatic polyamide, and
(B)a flame retardant mixture comprising:
b1) at least one flame retardant comprising a material selected from the group consisting of phosphinates of the formula (I); disphosphinates of the formula (II); polymers of (I); polymers of (II); and mixtures of two or more thereof 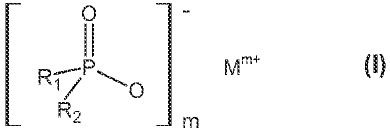 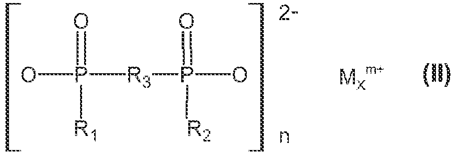 wherein R1 and R2 are independently selected from hydrogen, linear or branched C1 -C6 alkyl groups, and aryl groups; R3 is a linear or branched C1-C10-alkylene group, a C6-C10-arylene group, an -alkylarylene group or an-arylalkylene group; M is selected from the group consisting of calcium, magnesium, aluminum, zinc and mixtures thereof; m is 2 to 3; n is 1 or 3; and x is 1 or 2, and
b2) a phosphoric ester flame retardant of formula (III) 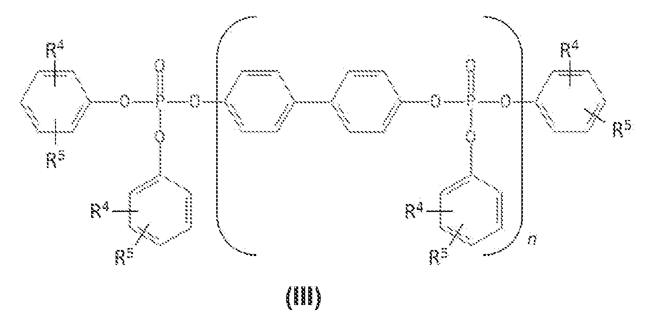 wherein R4 and R5 each independently represent a hydrogen atom or a methyl group and n represents a number of 1 to 5.

2. The flame retardant polyamide composition of Claim 1 consisting of:
(A) one or more semi-aromatic polyamide,
(B)a flame retardant mixture comprising:
b1) from 10 to 30 weight percent based on the total weight of the flame retardant polyamide composition of at least one flame retardant comprising a material selected from the group consisting of phosphinates of the formula (I); disphosphinates of the formula (II); polymers of (I); polymers of (II); and mixtures of two or more thereof 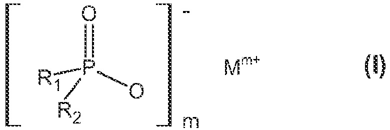 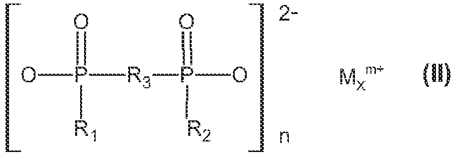 wherein R1 and R2 are independently selected from hydrogen, linear or branched C1 -C6 alkyl groups, and aryl groups; R3 is a linear or branched C1-C10-alkylene group, a C6-C10-arylene group, an -alkylarylene group or an-arylalkylene group; M is selected from the group consisting of calcium, magnesium, aluminum, zinc and mixtures thereof; m is 2 to 3; n is 1 or 3; and x is 1 or 2, and
b2) from 0.5 to 3 weight percent based on the total weight of the flame retardant polyamide composition of an phosphate ester flame retardant of formula (III) 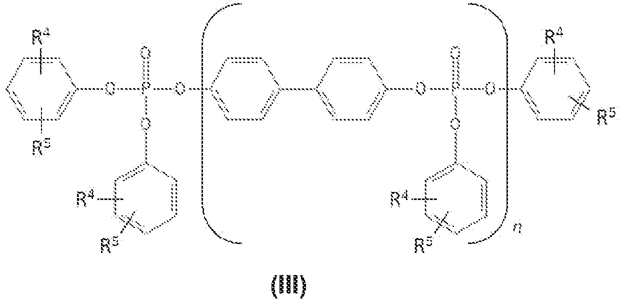 wherein R4 and R5 each independently represent a hydrogen atom or a methyl group and n represents a number of 1 to 5
and
(C)from 0.05 to 10 weight percent based on the total weight of the flame retardant polyamide composition of additives wherein the sum of component a) to c) amounts to 100 weight percent.

3. The flame retardant polyamide composition according to any preceding claim, wherein the semi-aromatic polyamide is at least one selected from the group consisting of PA6/4T, PA6/6T, PA6/10T, PA6/12T, PA610/6T, PA612/6T, PA614/6T, PA6/61/6T, PA D6/66/ /6T, PA 6T/XT, PA1010/10T, PA1010/1210/10T/12T, PA11/4T, PA11/6T, PA11/10T, PA11/12T, PA12/4T, PA12/6T, PA12/10T PA1212/12T, PA66/6T, PA6I/6T, PA66/6I/6T, PA6T/6I, and their copolymers and combinations.

4. The flame retardant polyamide composition according to any preceding claim, wherein the semi-aromatic polyamide is at least one selected from the group consisting of PA66/6T, PA6T/XT, PA6I/6T, PA66/6I/6T, PA6T/6I and their copolymers and combinations thereof.

5. The flame retardant polyamide composition according to claim 2,
wherein the additives are selected from the group consisting of stabilizers, processing agents, metal deactivators, antioxidants, UV stabilizers, heat stabilizers, flame retardant synergists, dyes and/or pigments.

6. The flame retardant polyamide composition according to claim 5
wherein the flame retardant synergist is one or more of zinc borate, aluminium oxide, boehmite or zinc stannate.

7. The flame retardant polyamide composition according to Claim 5
wherein the antioxidant is selected from one or more of phenolic antioxidants, thioether antioxidants, and phosphite antioxidants.

8. The flame retardant polyamide composition according to any preceding claim wherein the flame retardant b1) comprises aluminium diethylphosphinate and/or aluminium methylethylphosphinate.

9. The flame retardant polyamide composition according to any preceding claim wherein R4 and R5 are hydrogen atoms.

10. A molded article comprising the flame retardant polyamide composition of any of claims 1-9.

11. The molded article of claim 10 selected from the group consisting of connector housings, breaker housings and contractor housings.

12. The molded article of claim 11 wherein the article is an electrical connector.

13. The use of a flame retardant polyamide composition according to any one of the claims 1 or 12 for making an insulated wire and/or cable.

14. The flame retardant polyamide composition according to any one of the claims 1 to 9 and articles made thereof according to claims 10 to 12 wherein the flame retardant polyamide composition or articles made thereof comply with the UL-94 V0 standard at 0.8 mm.

15. The flame retardant polyamide composition according to any one of the claims 1 to 9 and articles made thereof according to claims 10 to 12
wherein the flame retardant polyamide composition or articles made thereof have an elongation at break of more than 5% measured according to ISO 527-2/1A/50.

## Patentansprüche

1. Flammwidrige Polyamidzusammensetzung umfassend:
(A) einen oder mehr halbaromatische Polyamide und
(B) eine flammwidrige Mischung umfassend:
b1) mindestens ein Flammschutzmittel umfassend ein Material ausgewählt aus der Gruppe bestehend aus Phosphinaten der Formel (I), Diphosphinaten der Formel (II), Polymeren von (I), Polymeren von (II) und Mischungen von zwei oder mehr davon 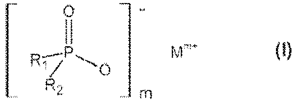 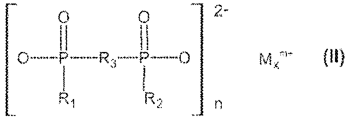 wobei R¹ und R² unabhängig unter Wasserstoff, linearen oder verzweigten C₁-C₆-Alkylgruppen und -Arylgruppen ausgewählt werden; R3 eine lineare oder verzweigte C₁-C₁₀-Alkylengruppe, eine C₆-C₁₀-Arylengruppe, eine -Alkylarylengruppe oder eine - Arylalkylengruppe ist; M aus der Gruppe ausgewählt ist bestehend aus Calcium, Magnesium, Aluminium, Zink und Mischungen davon; m 2 bis 3 beträgt; n 1 oder 3 beträgt; und x 1 oder 2 beträgt und
b2) Phosphorsäureester-Flammschutzmittel der Formel (III) 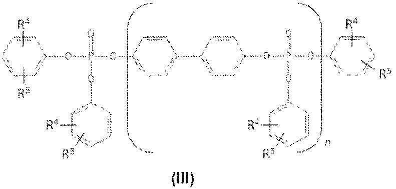 wobei R4 und R5 jeweils unabhängig ein Wasserstoffatom oder eine Methylgruppe darstellen und n eine Zahl von 1 bis 5 darstellt.

2. Flammwidrige Polyamidzusammensetzung nach Anspruch 1, bestehend aus:
(A) einem oder mehr halbaromatischen Polyamiden,
(B) einer flammwidrigen Mischung umfassend:
b1) 10 bis 30 Gewichtsprozent, auf das Gesamtgewicht der flaumwidrigen Polyamidzusammensetzung bezogen, mindestens eines Flammschutzmittels umfassend ein Material ausgewählt aus der Gruppe bestehend aus Phosphinaten der Formel (I), Diphosphinaten der Formel (II), Polymeren von (I), Polymeren von (II) und Mischungen von zwei oder mehr davon 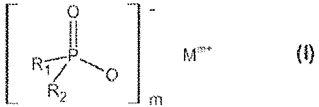 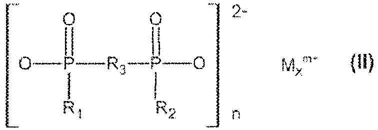 wobei R¹ und R² unabhängig unter Wasserstoff, linearen oder verzweigten C₁-C₆-Alkylgruppen und -Arylgruppen ausgewählt werden; R³ eine lineare oder verzweigte C1-C10-Alkylengruppe, eine C6-C10-Arylengruppe, eine -Alkylarylengruppe oder eine - Arylalkylengruppe ist; M aus der Gruppe ausgewählt ist bestehend aus Calcium, Magnesium, Aluminium, Zink und Mischungen davon; m 2 bis 3 beträgt; n 1 oder 3 beträgt; und x 1 oder 2 beträgt und
b2) 0,5 bis 3 Gewichtsprozent, auf das Gesamtgewicht der flammwidrigen Polyamidzusammensetzung bezogen, eines Phosphorsäureester-Flammschutzmittel der Formel (III) 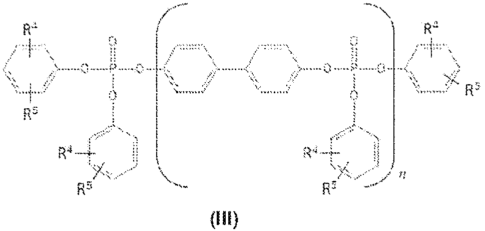 wobei R⁴ und R⁵ jeweils unabhängig ein Wasserstoffatom oder eine Methylgruppe darstellen und n eine Zahl von 1 bis 5 darstellt und
(C) 0,05 bis 10 Gewichtsprozent, auf das Gesamtgewicht der flammwidrigen Polyamidzusammensetzung bezogen, Zusatzmittel, wobei die Summe der Komponenten a) bis c) 100 Gewichtsprozent beträgt.

3. Flammwidrige Polyamidzusammensetzung nach irgendeinem der vorhergehenden Ansprüche, wobei das halbaromatische Polyamid mindestens eines ist ausgewählt aus der Gruppe bestehend aus PA6/4T, PA6/6T, PA6/10T, PA6/12T, PA610/6T, PA612/6T, PA614/6T, PA6/6I/6T, PA D6/66/ /6T, PA 6T/XT, PA1010/10T, PA1010/1210/10T/12T, PA11/4T, PA11/6T, PA11/10T, PA11/12T, PA12/4T, PA12/6T, PA12/10T PA1212/12T, PA66/6T, PA6I/6T, PA66/6I/6T, PA6T/6I und ihren Copolymeren und Kombinationen.

4. Flammwidrige Polyamidzusammensetzung nach irgendeinem vorhergehenden Anspruch, wobei das halbaromatische Polyamid mindestens eines ist ausgewählt aus der Gruppe bestehend aus PA66/6T, PA6T/XT, PA6I/6T, PA66/6I/6T, PA6T/61 und ihren Copolymeren und Kombinationen davon.

5. Flammwidrige Polyamidzusammensetzung nach Anspruch 2, wobei die Zusatzmittel aus der Gruppe ausgewählt sind bestehend aus Stabilisatoren, Verarbeitungsmitteln, Metalldeaktivatoren, Antioxidationsmitteln, UV-Stabilisatoren, Wärmestabilisatoren, Flammschutzmittelsynergisten, Farbstoffen und/oder Pigmenten.

6. Flammwidrige Polyamidzusammensetzung nach Anspruch 5, wobei der Flammschutzmittelsynergist eines oder mehr von Zinkborat, Aluminiumoxid, Böhmit oder Zinkstannat ist.

7. Flammwidrige Polyamidzusammensetzung nach Anspruch 5, wobei das Antioxidationsmittel unter einem oder mehreren von phenolischen Antioxidationsmitteln, Thioetherantioxidationsmitteln und Phosphitantioxidationsmitteln ausgewählt wird.

8. Flammwidrige Polyamidzusammensetzung nach irgendeinem vorhergehenden Anspruch, wobei das Flammschutzmittel b1) Aluminiumdiethylphosphinat und/oder Aluminiummethylethylphosphinat umfasst.

9. Flammwidrige Polyamidzusammensetzung nach irgendeinem vorhergehenden Anspruch, wobei R4 und R5 Wasserstoffatome sind.

10. Geformter Artikel umfassend die flammwidrige Polyamidzusammensetzung nach einem der Ansprüche 1-9.

11. Geformter Artikel nach Anspruch 10 ausgewählt aus der Gruppe bestehend aus Steckverbindergehäusen, Schaltergehäusen und Kontaktorgehäusen.

12. Geformter Artikel nach Anspruch 11, wobei der Artikel ein elektrischer Steckverbinder ist

13. Flammwidrige Polyamidzusammensetzung nach irgendeinem der Ansprüche 1 bis 12 zum Herstellen eines isolierten Drahts und/oder Kabels.

14. Flammwidrige Polyamidzusammensetzung nach irgendeinem der Ansprüche 1 bis 9 und Artikel, die daraus hergestellt sind, nach den Ansprüchen 10 bis 12, wobei die flammwidrige Polyamidzusammensetzung oder die Artikel, die daraus hergestellt sind, der UL-94 VO-Norm bei 0,8 mm entsprechend.

15. Flammwidrige Polyamidzusammensetzung nach irgend einem der Ansprüche 1 bis 9 und Artikel, die daraus hergestellt sind, nach den Ansprüchen 10 bis 12, wobei die flammwidrige Polyamidzusammensetzung oder die Artikel, die daraus hergestellt sind, eine Bruchdehnung von mehr als 5 %, ISO 527-2/1A/50 entsprechend gemessen, aufweisen.

## Revendications

1. Composition polyamide ignifuge comprenant:
(A) un ou plusieurs polyamides semi-aromatiques, et
(B) un mélange ignifuge comprenant:
b1) au moins un agent ignifuge comprenant un matériau sélectionné dans le groupe constitué des phosphinates de la formule (I); des disphosphinates de la formule (II); des polymères de (I); des polymères de (II); et des mélanges de deux ou plusieurs d'entre eux 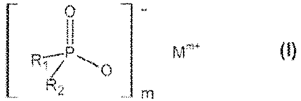 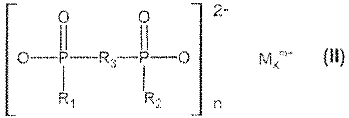 où R¹ et R² sont indépendamment sélectionnés parmi un atome d'hydrogène, les groupes alkyle en C₁ à C₆ linéaires ou ramifiés, et les groupes aryle; R³ est un groupe alcylène en C₁ à C₁₀ linéaire ou ramifié, un groupe arylène en C₆ à C₁₀, un groupe alkylarylène ou un groupe arylalcylène; M est sélectionné dans le groupe constitué du calcium, du magnésium, de l'aluminium, du zinc et de leurs mélanges; m a la valeur de 2 à 3; n a la valeur de 1 ou 3; et x a la valeur de 1 ou 2, et
b2) un agent ignifuge ester phosphorique de formule (III) 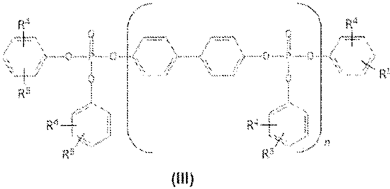 où R⁴ et R⁵ représentent chacun indépendamment un atome d'hydrogène ou un groupe méthyle et n représente un nombre d'une valeur de 1 à 5.

2. Composition polyamide ignifuge selon la revendication 1 constituée de:
(A) un ou plusieurs polyamides semi-aromatiques,
(B) un mélange ignifuge comprenant:
b1) de 10 à 30 pour cent en poids sur la base du poids total de la composition polyamide ignifuge d'au moins un agent ignifuge comprenant un matériau sélectionné dans le groupe constitué des phosphinates de la formule (I); des disphosphinates de la formule (II); des polymères de (I); des polymères de (II); et des mélanges de deux ou plusieurs d'entre eux 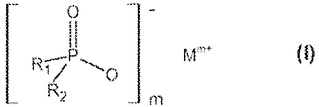 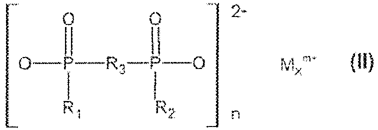 où R¹ et R² sont indépendamment sélectionnés parmi un atome d'hydrogène, les groupes alkyle en C₁ à C₆ linéaires ou ramifiés, et les groupes aryle; R³ est un groupe alcylène en C₁ à C₁₀ linéaire ou ramifié, un groupe arylène en C₆ à C₁₀, un groupe alkylarylène ou un groupe arylalcylène; M est sélectionné dans le groupe constitué du calcium, du magnésium, de l'aluminium, du zinc et de leurs mélanges; m a la valeur de 2 à 3; n a la valeur de 1 ou 3; et x a la valeur de 1 ou 2, et
b2) de 0,5 à 3 pour cent en poids sur la base du poids total de la composition polyamide ignifuge d'un agent ignifuge ester phosphate de formule (III) 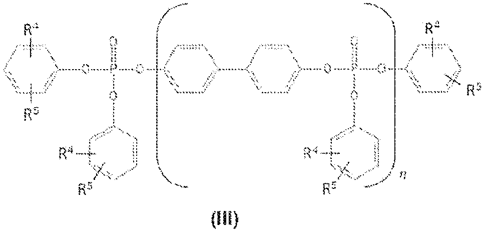 où R⁴ et R⁵ représentent chacun indépendamment un atome d'hydrogène ou un groupe méthyle et n représente un nombre d'une valeur de 1 à 5 et
(C) de 0,05 à 10 pour cent en poids sur la base du poids total de la composition polyamide ignifuge d'additifs où la somme des quantités des composants a) à c) s'élève jusqu'à 100 pour cent en poids.

3. Composition polyamide ignifuge selon l'une quelconque des revendications précédentes, où le polyamide semi-aromatique est au moins l'un sélectionné dans le groupe constitué de PA6/4T, PA6/6T, PA6/10T, PA6/12T, PA610/6T, PA612/6T, PA614/6T, PA6/6I/6T, PAD6/66//6T, PA6T/XT, PA1010/10T, PA1010/1210/10T/12T, PA11/4T, PA11/6T, PA11/10T, PA11/12T, PA12/4T, PA12/6T, PA12/10T PA1212/12T, PA66/6T, PA6I/6T, PA66/6I/6T, PA6T/6I, et leurs copolymères et leurs combinaisons.

4. Composition polyamide ignifuge selon l'une quelconque des revendications précédentes, où le polyamide semi-aromatique est au moins l'un sélectionné dans le groupe constitué de PA66/6T, PA6T/XT, PA6I/6T, PA66/6I/6T, PA6T/6I et leurs copolymères et leurs combinaisons.

5. Composition polyamide ignifuge selon la revendication 2, où les additifs sont sélectionnés dans le groupe constitué des agents stabilisants, des agents de transformation, des désactivateurs de métaux, des antioxydants, des agents stabilisants du rayonnement UV, des agents stabilisants thermiques, des agents ignifuges agissant en synergie, des teintures et/ou des pigments.

6. Composition polyamide ignifuge selon la revendication 5 où l'agent ignifuge agissant en synergie est l'un ou plusieurs parmi le borate de zinc, l'oxyde d'aluminium, la boehmite ou le stannate de zinc.

7. Composition polyamide ignifuge selon la revendication 5 où l'antioxydant est sélectionné parmi un ou plusieurs des antioxydants phénoliques, des antioxydants thioéthers, et des antioxydants phosphites.

8. Composition polyamide ignifuge selon l'une quelconque des revendications précédentes où l'agent ignifuge b1) comprend du diéthylphosphinate d'aluminium et/ou du méthyléthylphosphinate d'aluminium.

9. Composition polyamide ignifuge selon l'une quelconque des revendications précédentes où R4 et R5 sont des atomes d'hydrogène.

10. Article moulé comprenant la composition polyamide ignifuge selon l'une quelconque des revendications 1 à 9.

11. Article moulé selon la revendication 10 sélectionné dans le groupe constitué des boîtiers de connecteur, des boîtiers de disjoncteur et des boîtiers de contacteur.

12. Article moulé selon la revendication 11 où l'article est un connecteur électrique.

13. Utilisation d'une composition polyamide ignifuge selon l'une quelconque des revendications 1 ou 12 pour fabriquer un fil et/ou un câble isolé.

14. Composition polyamide ignifuge selon l'une quelconque des revendications 1 à 9 et articles fabriqués à partir de celle-ci selon les revendications 10 à 12 où la composition polyamide ignifuge ou les articles fabriqués à partir de celle-ci sont conformes à la norme UL-94 V0 à 0,8 mm.

15. Composition polyamide ignifuge selon l'une quelconque des revendications 1 à 9 et articles fabriqués à partir de celle-ci selon les revendications 10 à 12 où la composition polyamide ignifuge ou les articles fabriqués à partir de celle-ci présentent un allongement à la rupture de plus de 5 % mesuré selon la norme ISO 527-2/1A/50.
